(19) Europäisches Patentamt
European Patent Office
Office européen des brevets

(11) **EP 4 583 090 A1**

(12) **EUROPEAN PATENT APPLICATION**
published in accordance with Art. 153(4) EPC

(43) Date of publication:
**09.07.2025   Bulletin 2025/28**

(21) Application number: **23858867.7**

(22) Date of filing: **28.06.2023**

(51) International Patent Classification (IPC):
**G09G 3/3208** (2016.01)      **G09G 3/36** (2006.01)

(52) Cooperative Patent Classification (CPC):
**G09G 3/3208; G09G 3/36**

(86) International application number:
**PCT/CN2023/103029**

(87) International publication number:
**WO 2024/045829 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **29.08.2022   CN 202211047451**

(71) Applicant: **Shenzhen TCL Creative Cloud
Technology CO., Ltd.
Shenzhen, Guangdong 518000 (CN)**

(72) Inventor: **LIU, Junting
Shenzhen, Guangdong 518000 (CN)**

(74) Representative: **Murgitroyd & Company
165-169 Scotland Street
Glasgow G5 8PL (GB)**

(54) **SCREEN BRIGHTNESS ADJUSTMENT METHOD AND APPARATUS, AND STORAGE MEDIUM AND ELECTRONIC DEVICE**

(57)   A screen brightness adjustment method and apparatus, and a storage medium and an electronic device (500), used for prolonging the battery life of the electronic device (500), and improving the user experience. When a camera application is running, an image sensor is driven by a kernel layer to acquire photosensitive data; the photosensitive data is acquired by a hardware abstraction layer, and an ambient light brightness value is determined; and screen backlight brightness corresponding to a camera application interface is adjusted according to the ambient light brightness value and a current screen brightness value.

Drive an image sensor corresponding to a camera application through a kernel layer of an electronic device to obtain photosensitive data forming each frame of an image when the camera application of the electronic device is in operation. — 101

Obtain the photosensitive data through a hardware abstraction layer of the camera application, and determine an ambient light brightness value at where the electronic device is located based on the photosensitive data. — 102

Obtain current screen brightness value of the electronic device and the ambient light brightness value through the camera application. — 103

Adjust a screen backlight brightness corresponding to a camera application interface of the electronic device when the camera application is in operation based on the ambient light brightness value and the current screen brightness value. — 104

FIG. 1

EP 4 583 090 A1

## Description

This application claims priority to Chinese Application No. 2022110474511 filed August 29, 2022 and entitled with "SCREEN BRIGHTNESS ADJUSTMENT METHOD AND APPARATUS, AND STORAGE MEDIUM AND ELECTRONIC DEVICE", the contents of which are incorporated herein by reference in their entirety.

## FIELD OF THE INVENTION

The present disclosure relates to the field of data processing technology, and in particular, to a backlight brightness adjustment method, apparatus, a terminal device, and storage medium.

## BACKGROUND

In the case where the electronic device does not have a light sensor, the light sensor is disabled, or an automatic brightness adjustment function is turned off, the screen brightness of the electronic device will not dynamically adjust according to changes in ambient light brightness when the camera application is opened. At this time, the screen brightness either remains unchanged or the camera application adjusts the screen brightness to a higher level to facilitate the user's use of the camera application.

## TECHNICAL PROBLEM

Since the camera application itself consumes a lot of power, adjusting the screen brightness to a higher level will further increase the power consumption of the electronic device.

## TECHNICAL SOLUTION

Embodiments of the present disclosure provides a screen brightness adjustment method and device, which can achieve adaptive screen brightness for the camera application and reduce power consumption when the camera application is used in the electronic device.

An embodiment of the present disclosure provides a screen brightness adjustment method, applied to an electronic device, comprising:
when the camera application of the electronic device is in operation, driving an image sensor corresponding to the camera application through a kernel layer of the electronic device to obtain photosensitive data forming each frame of the image;

Obtaining the photosensitive data through a hardware abstraction layer of the camera application, and determining an ambient light brightness value of the electronic device based on the photosensitive data;

Obtaining current screen brightness value of the electronic device and the ambient light brightness value through the camera application; and

Adjusting a screen backlight brightness corresponding to the camera application interface of the electronic device when the camera application is in operation based on the ambient light brightness value and the current screen brightness value.

An embodiment of the present disclosure provides a screen brightness adjustment device applied to an electronic device, comprising:

a photosensitive module configured for, when a camera application of the electronic device is in operation, driving an image sensor corresponding to the camera application through a kernel layer of the electronic device to obtain photosensitive data forming each frame of an image;
an ambient determination module, configured for obtaining the photosensitive data through a hardware abstraction layer of the camera application, and determining an ambient light brightness value at where the electronic device is located based on the photosensitive data;
an acquisition module, configured for obtaining current screen brightness value of the electronic device and the ambient light brightness value through the camera application; and
an adjustment module, configured for adjusting a screen backlight brightness corresponding to a camera application interface of the electronic device when the camera application is in operation based on the ambient light brightness value and the current screen brightness value.

Another embodiment of the present disclosure provides a computer-readable storage medium storing a plurality of instructions executable by the processor to perform the screen brightness adjustment method.

Another embodiment of the present disclosure provides an electronic device comprising a processor and a memory storing an application executable by the processor to perform the method of screen brightness adjustment method.

## Advantageous effect

The screen brightness adjustment method, an apparatus, a terminal device, and a storage medium provided by the embodiments of the present disclosure determine the ambient light brightness value through the photosensitive data of the image sensor when the camera application is in operation, and adjust the screen backlight brightness corresponding to the camera application interface of the electronic device when the camera application is in operation based on the ambient light brightness value and the current screen brightness value. This achieves adaptive screen brightness for the camera application, without having to adjust the screen brightness to a higher level when the camera application is running, greatly reducing the power consumption of the electronic device, improving the battery life of the electronic device, and enhancing the user experience.

BRIEF DESCRIPTION OF THE DRAWINGS

In order to more clearly illustrate the technical solutions in the embodiments of the present disclosure, the drawings required to be used in the description of the embodiments will be briefly introduced below, and it is obvious that the drawings described below are only some embodiments of the present disclosure, and for those skilled in the art, other drawings can be acquired according to these drawings without creative labor.

FIG. 1 is a flowchart of a screen brightness adjustment method according to an embodiment of the present disclosure.
FIG. 2 is a flowchart of the screen brightness adjustment method according to another embodiment of the present disclosure.
FIG. 3 illustrates a linear adjustment curve for the screen brightness adjustment according to an embodiment of the present disclosure.
FIG. 4 is a schematic diagram of the power consumption curve of the electronic device according to an embodiment of the present disclosure.
FIG. 5 is a schematic diagram of the power consumption of the electronic device according to an embodiment of the present disclosure.
FIG. 6 illustrates the power consumption curve of the electronic device according to an embodiment of the present disclosure.
FIG. 7 is another schematic diagram of the power consumption of the electronic device according to an embodiment of the present disclosure.
FIG. 8 is a flowchart of the screen brightness adjustment method according to another embodiment of the present disclosure.
FIG. 9 is a schematic diagram of a screen brightness adjustment device according to an embodiment of the present disclosure.
FIG. 10 is a block diagram of the electronics device according to an embodiment of the present disclosure.
FIG. 11 is a block diagram of the electronics device according to another embodiment of the present disclosure.

DETAILED DESCRIPTION OF THE PRESENT DISCLOSURE

Embodiments of present disclosure

The technical solutions in the embodiments of the present disclosure will be clearly and completely described below in conjunction with the accompanying drawings in the embodiments of the present disclosure, and it is obvious that the described embodiments are only part of the embodiments of the present disclosure, not all embodiments. Based on the embodiments in the present disclosure, all other embodiments obtained by a person skilled in the art without creative work fall within the scope of protection of the present disclosure.

An embodiment of the present disclosure provides a screen brightness adjustment method, apparatus, a terminal device, and storage medium. Another embodiment of the present disclosure provides a screen brightness adjustment device integrated in an t electronic device. The electronic device may be a smart phone, a smart watch, a tablet computer, a laptop, smart cars, where fixed devices include but are not limited to desktop computers, smart TVs, etc. The electronic device may include a smart phone, a pad (tablet computer), a handheld computer, a wearable device, a robot, a smart TV, a smart air conditioner, a smart vehicle-mounted device, a mobile phone, a digital camera, a video camera, etc. The electronic device includes a camera application, which may be any self-developed camera application such as a photo taking application or a third-party camera application, as long as the camera application can call the camera of the electronic device.

The camera application in the embodiment of the present disclosure being in the running state means that the camera application calls the camera of the electronic device. The screen brightness adjustment method in the embodiment of the present disclosure can be applied to a variety of screens, especially LCD screens.

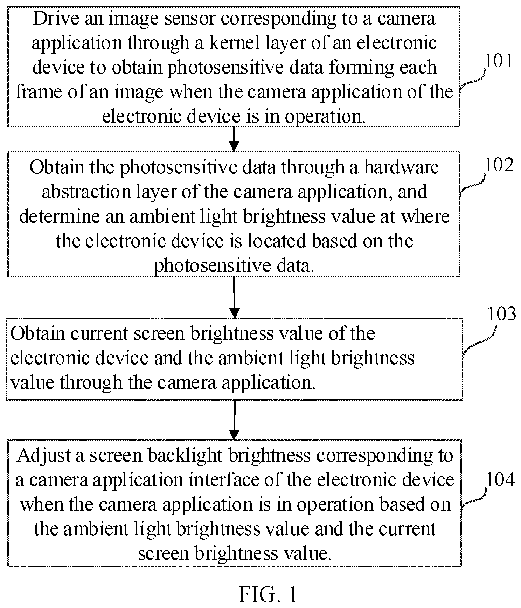

FIG. 1 is a flowchart of a screen brightness adjustment method according to an embodiment of the present disclosure. The screen brightness adjustment method includes the following operations.

101. When the camera application of the electronic device is in operation, an image sensor corresponding to a camera application is driven through a kernel layer of an electronic device to obtain photosensitive data forming each frame of the image. Actively opening the camera application of the electronic device or passively invoking the camera application of the electronic device can make the camera application of the electronic device in operation, for example, opening the camera application of the electronic device to take a photo, or invoking the camera application to make a video call, etc.

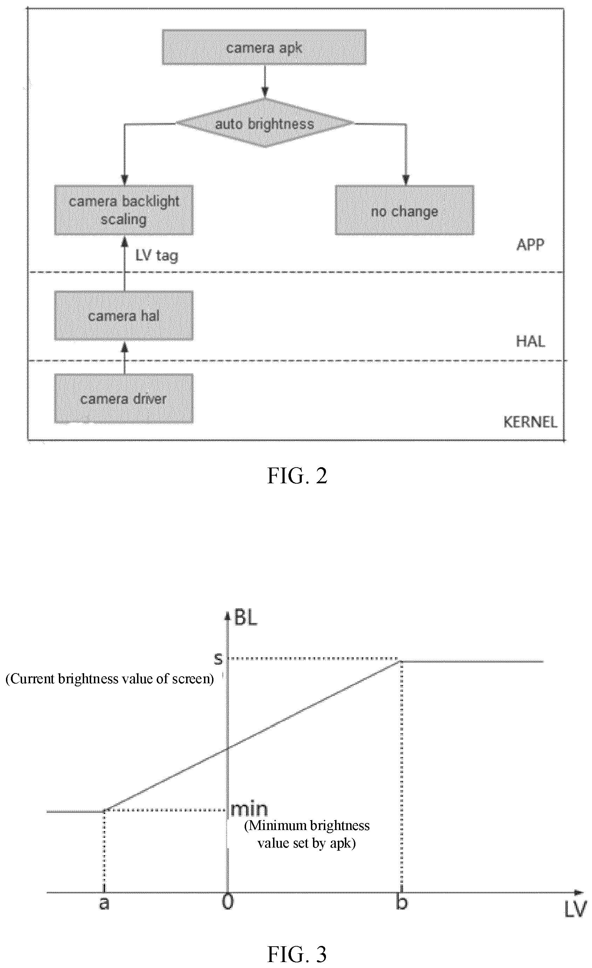

The electronic device of the present disclosure includes a kernel layer (KERNEL), a hardware abstraction layer (HAL), and an application layer (APP). The image sensor corresponding to the camera application is driven through the kernel layer of the electronic device to obtain the photosensitive data forming each frame of the image. As shown in FIG. 2, the kernel layer of the electronic device includes a camera driver, such as the camera driver as shown in FIG. 2, the camera driver can be used to drive the image sensor corresponding to the camera application to work, and the corresponding photosensitive data is formed when the image sensor works.

102. Obtain the photosensitive data through the hardware abstraction layer of the camera application, and determine an ambient light brightness value of the electronic device based on the photosensitive data.

The camera application communicates between the kernel layer and the hardware abstraction layer through a first interface, and communicates between the hardware abstraction layer and the application layer through a second interface.

The hardware abstraction layer of the electronic device includes a hardware abstraction layer of the camera application, such as the camera hal as shown in FIG. 2. In the hardware abstraction layer of the camera application, the photosensitive data of the kernel layer is obtained through the first interface, and the ambient light brightness value at where the electronic device is located is determined based on the photosensitive data.

Wherein, the step of determining the ambient light brightness value at where the electronic device is located based on the photosensitive data includes: extracting an exposure value from the photosensitive data using the hardware abstraction layer of the camera application to obtain the ambient light brightness value at where the electronic device is located.

In one embodiment, step 102 includes: adding communication parameters in the hardware abstraction layer, the communication parameters communicating with the camera application; obtaining the photosensitive data of the kernel layer through the hardware abstraction layer of the camera application; extracting an exposure value from the photosensitive data using the hardware abstraction layer to obtain the ambient light brightness value at where the electronic device is located; and assigning the ambient light brightness value to the communication parameters.

A communication parameter, such as a LV tag, is added in the data structure of the result metadata of the hardware abstraction layer of the camera application wherein the communication parameter communicates with the camera application. After obtaining the ambient light brightness value at where the electronic device is located in the hardware abstraction layer of the camera application, the ambient light brightness value forming each frame of the image is assigned to the communication parameter LV tag.

The electronic device in the embodiment of the present disclosure comprises a front camera and a rear camera. When there are multiple rear cameras, the rear camera in the embodiment of the present disclosure refers to the main camera on the back.

In one embodiment, the photosensitive data includes first photosensitive data corresponding to the front camera. Correspondingly, the step of determining the ambient light brightness value at where the electronic device is located based on the photosensitive data includes: determining the ambient light brightness value at where the electronic device is located based on the first photosensitive data, that is, extracting the exposure value from the first photosensitive data using the hardware abstraction layer of the camera application to obtain the ambient light brightness value corresponding to the front camera, and determining the ambient light brightness value corresponding to the front camera as the ambient light brightness value at where the electronic device is located. In this embodiment, regardless of how many cameras the electronic device includes, the ambient light brightness value corresponding to the front camera is determined to be the ambient light brightness value at where the electronic device is located. Because the position of the front camera on the electronic device is close to the position of the light sensor, the ambient light brightness value corresponding to the front camera is determined to be the ambient light brightness value at where the electronic device is located, so that the determined ambient light brightness value is close to the ambient light brightness value determined by the light sensor, thereby improving the accuracy of the determined ambient light brightness value.

In one embodiment, the photosensitive data includes the first photosensitive data corresponding to the front camera and second photosensitive data corresponding to the rear camera. Correspondingly, two communication parameters need to be added to assign the ambient light brightness value corresponding to the front camera and the ambient light brightness value corresponding to the rear camera, respectively. The step of determining the ambient light brightness value at where the electronic device is located based on the photosensitive data includes: determining the ambient light brightness value at where the electronic device is located based on the first photosensitive data and the second photosensitive data, that is, extracting the exposure value from the first photosensitive data using the hardware abstraction layer of the camera application to obtain a first ambient light brightness value corresponding to the front camera, and extracting the exposure value from the second photosensitive data using the hardware abstraction layer of the camera application to obtain a second ambient light brightness value corresponding to the rear camera, and determining the ambient light brightness value at where the electronic device is located based on the first ambient light brightness value and the second ambient light brightness value.

For example, a weighted summation of the first ambient light brightness value and the second ambient light brightness value is performed to obtain a weighted sum thereof, and the ambient light brightness value obtained by the weighted sum is determined as the ambient light brightness value at where the electronic device is located. The weights corresponding to the first ambient light brightness value and the second ambient light brightness value can be the same or different. Thus, the ambient light brightness value at where the electronic device is located can be determined based on the first ambient light brightness value corresponding to the front camera and the second ambient light brightness value corresponding to the rear camera to improve accuracy.

For example, when the weights corresponding to the first ambient light brightness value and the second ambient light brightness value are the same, such as 0.5, the first ambient light brightness value and the second ambient light brightness value are averaged to determine an average value of the first ambient light brightness value and the second ambient light brightness value, and the average value is determined to be the ambient light brightness value at where the electronic device is located.

For example, the smaller ambient light brightness value between the first ambient light brightness value and the second ambient light brightness value is determined to be the ambient light brightness value at where the electronic device is located, and then the screen backlight brightness of the electronic device is adjusted based on the smaller ambient light brightness value to maximize the screen brightness corresponding to the camera application to meet the demand.

For example, the larger ambient light brightness value among the first ambient light brightness value and the second ambient light brightness value is determined as the ambient light brightness value at where the electronic device is located. Correspondingly, the screen brightness adjustment method further includes: switching current camera of the electronic device to the camera corresponding to the largest ambient light brightness value. In this way, the problem of a poor experience caused by the camera of the electronic device taking a picture of the side where the brightness value of the ambient light is smaller during a video call, and thus not being able to see the corresponding image clearly, can be solved. For example, when the current camera of the electronic device is the rear camera, but the ambient light brightness value corresponding to the rear camera is small, such as when the rear camera of the electronic device is placed against the table by the electronic device, and the captured image cannot be seen clearly, therefore, the current camera of the electronic device is switched to the front camera so that the other party in the video call can see the captured image more clearly, improving the video call effect.

The first photosensitive data corresponding to the front camera and the second photosensitive data corresponding to the rear camera can be obtained through the same image sensor or through different image sensors. When obtained through one image sensor, the first photosensitive data and the second photosensitive data can be quickly obtained when the camera application is opened.

When the first photosensitive data and the second photosensitive data are obtained through different image sensors, correspondingly, the front camera can be set to correspond to the first image sensor, and the rear camera can be set to correspond to the second image sensor, that is, setting the first image sensor for the front camera and the second image sensor for the rear camera. The first image sensor and the second image sensor have the same function (but are not depth sensors). The first image sensor corresponding to the front camera is driven through the kernel layer of the electronic device to obtain the first photosensitive data forming each frame of the image of the front camera, and the second image sensor corresponding to the rear camera is driven to obtain the second photosensitive data forming each frame of the image of the rear camera. In this way, the first photosensitive data corresponding to the front camera and the second photosensitive data corresponding to the rear camera can be obtained in real-time. It should be noted that in existing solutions, the front camera and the rear camera (main camera) mostly use the same image sensor, and the rear camera is also equipped with a depth sensor. In this embodiment, the hardware configuration of the electronic device is changed, and an image sensor is set for both the front camera and the rear camera.

103. Obtain current screen brightness value of the electronic device and the ambient light brightness value through the camera application. In the application layer of the electronic device, as shown in FIG. 2, the camera application (camera apk) obtains the determined ambient light brightness value through the second interface, that is, obtaining the communication parameter LV tag of the hardware abstraction layer through the second interface to obtain the ambient light brightness value.

Additionally, it is necessary to obtain the current screen brightness value of the electronic device through the camera application. The brightness value of the electronic device is stored in the electronic device through parameters, and the current screen brightness value of the electronic device can be obtained by obtaining the corresponding parameters.

104. Adjust the screen backlight brightness corresponding to the camera application interface of the electronic device when the camera application is in operation based on the ambient light brightness value and the current screen brightness value.

Since the current screen of the electronic device displays the camera application, adjusting the screen backlight brightness of the camera application means adjusting the screen backlight brightness corresponding to the camera application interface of the electronic device when using the camera application, achieving adaptive screen brightness for the camera application without having to adjust the screen brightness of the electronic device to a higher level, thereby reducing the power consumption of the electronic device when using the camera application. The camera application interface includes interfaces that call and use the camera of the electronic device, such as the photo-taking interface, video recording interface, video call interface, etc. In one embodiment, the camera application interface also includes other interfaces belonging to the camera application, such as an interface for adjusting the photo-taking mode, etc.

Correspondingly, step 104 comprises: determining whether the current screen brightness value is greater than the minimum screen brightness value. When the current screen brightness value is not greater than the minimum screen brightness value, such as when the current screen brightness value is less than the minimum screen brightness value, the screen backlight brightness corresponding to the camera application interface of the electronic device when the camera application is in operation is adjusted to the minimum screen brightness value; when the current screen brightness value is greater than the minimum screen brightness value, the screen backlight brightness corresponding to the camera application interface of the electronic device when the camera application is in operation is adjusted based on the ambient light brightness value.

The current screen brightness value can be represented as s, and the minimum screen brightness value can be represented as min. When s <= min, that is, it means the current screen brightness value is less than or equal to the minimum screen brightness value. When s > min, that is, it means the current screen brightness value is greater than the minimum screen brightness value. For example, assuming the brightness level of the electronic device is 2047, then the minimum screen brightness value min can be 185.

The step of adjusting the screen backlight brightness corresponding to the camera application interface of the electronic device when the camera application is in operation based on the ambient light brightness value comprises: linearly adjusting the screen backlight brightness corresponding to the camera application interface of the electronic device when the camera application is in operation, or non-linearly adjusting the screen backlight brightness corresponding to the camera application interface of the electronic device when the camera application is in operation based on the ambient light brightness value, or adjusting the screen backlight brightness corresponding to the camera application interface of the electronic device when the camera application is in operation according to a mapping table.

When the screen backlight brightness corresponding to the camera application interface of the electronic device when the camera application is in operation is adjusted according to a mapping table, a relationship between the ambient light brightness value at where the electronic device is located and the screen backlight brightness corresponding to the camera application interface of the electronic device when the camera application is in operation will be set in advance. This relationship can be represented by the mapping table or by other means. Therefore, once the ambient light brightness value at where the electronic device is located is determined, the corresponding screen backlight brightness of the electronic device when the camera application is in operation can be obtained according to the relationship, such as the mapping table.

When the screen backlight brightness corresponding to the camera application interface of the electronic device when the camera application is in operation is adjusted linearly when the camera application is in operation, correspondingly, a linear adjustment curve of the screen backlight brightness is determined based on the dynamic changes of the ambient light brightness value to adjust the screen backlight brightness according to the linear adjustment curve to achieve adaptive screen brightness. Linear adjustment of the screen backlight brightness can achieve smooth adjustment and is simpler compared to curve adjustment, thus improving the adjustment efficiency.

In one embodiment, the step of linearly adjusting the screen backlight brightness corresponding to the camera application interface of the electronic device when the camera application is in operation based on the ambient light brightness value comprises: when the ambient light brightness value is less than or equal to a first preset ambient light brightness value, adjusting the screen backlight brightness corresponding to the camera application interface of the electronic device when the camera application is in operation to the minimum screen brightness value; when the ambient light brightness value is between the first preset ambient light brightness value and a second preset ambient light brightness value, linearly adjusting the screen backlight brightness corresponding to the camera application interface of the electronic device when the camera application is in operation according to a preset formula; wherein the second preset ambient light brightness value is greater than the first preset ambient light brightness value; and when the ambient light brightness value is greater than or equal to the second preset ambient light brightness value, adjusting the screen backlight brightness corresponding to the camera application interface of the electronic device when the camera application is in operation to the current screen brightness value.

The first preset ambient light brightness value can be represented as a, and the second preset ambient light brightness value can be represented as b, wherein b > a. The first preset ambient light brightness value a can be a negative value, such as -40, and the second preset ambient light brightness value can be a positive value, such as 160, etc. The ambient light brightness value can be represented as LV, and the screen backlight brightness value can be represented as BL.

When the ambient light brightness value is less than or equal to the first preset ambient light brightness value, that is, LV <= a, it means that the current environment of the electronic device is relatively dark. At this time, adjusting the screen backlight brightness to the minimum screen brightness value can meet the demand, that is, BL = min. When the ambient light brightness value is greater than or equal to the second preset ambient light brightness value, that is, LV >= b, it means that the current environment of the electronic device is relatively bright and the screen backlight brightness is adjusted to the current screen brightness value, that is, BL = s. When the ambient light brightness value is between the first preset ambient light brightness value and the second preset ambient light brightness value, that is, a < LV < b, it is adjusted according to the preset formula. The preset formula can be

$$BL = LV*(s-min)/(b-a) + (b*min-s*a)/\ b-a.$$

As shown in FIG. 3, FIG. 3 is a schematic diagram of a linear adjustment curve obtained based on the dynamic changes of the ambient light brightness values. The horizontal axis LV is the determined ambient light brightness value of the electronic device, and the vertical axis BL is the screen backlight brightness value. The linear adjustment can be performed according to the linear adjustment curve shown in FIG. 3.

In the above embodiment, when the camera application is in operation, the ambient light brightness value is determined through the photosensitive data of the image sensor, and the screen backlight brightness corresponding to the camera application interface of the electronic device when the camera application is in operation can be adjusted based on the ambient light brightness value and the current screen brightness value of the electronic device. This achieves adaptive screen brightness for the camera application without having to adjust the screen brightness to a higher level when the camera application is running, greatly reducing the power consumption of the electronic device, improving the battery life of the electronic device, and enhancing the user experience.

Additionally, since the camera application itself is in operation and needs to obtain the photosensitive data forming each frame of the image, in this embodiment, it only needs to extract the exposure value from the photosensitive data to obtain the ambient light brightness value and then obtain the current screen brightness through the camera application, so as to adjust the screen backlight brightness corresponding to the camera application interface based on the current screen brightness value and the ambient light brightness value, making the screen backlight brightness corresponding to the camera application adaptive to the ambient light brightness value. This reduces the power consumption of the electronic device while automatically adjusting the screen backlight brightness when using the camera application.

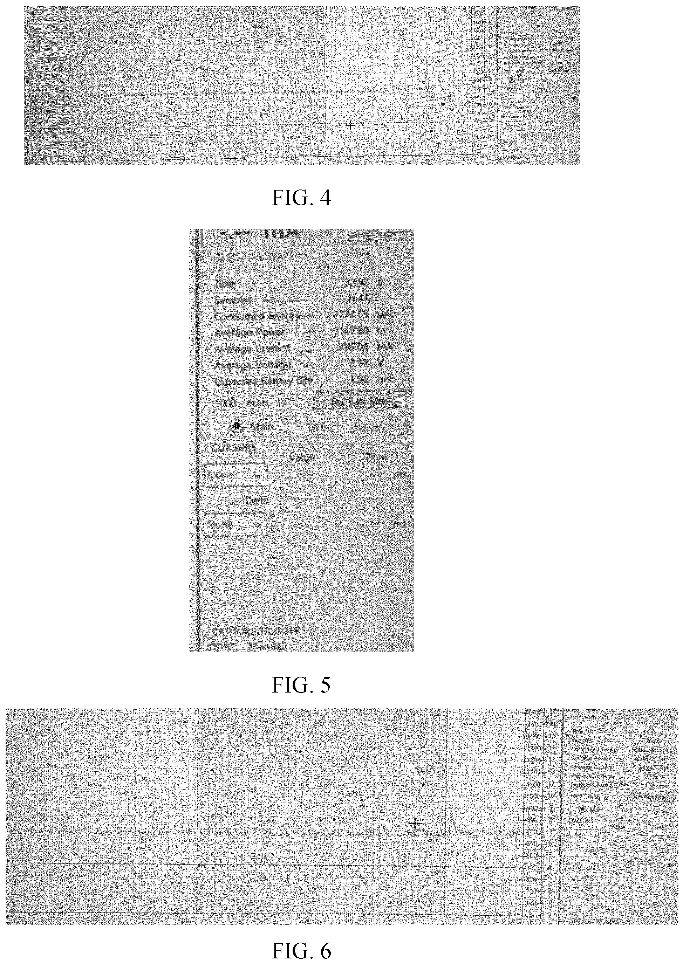

When the screen brightness of the electronic device is set to 90%, in an office environment, after opening the camera application in the electronic device, that is, after invoking the camera of the electronic device, the screen brightness of the electronic device is set to 90% and the camera is continuously used to obtain the curves and power consumption data as shown in FIG. 4 and FIG. 5. Another way is to use the method in the embodiments of the present disclosure to make the camera application adaptive to screen brightness, and continuously use the camera in the same way to obtain the curves and power consumption data as shown in FIG.

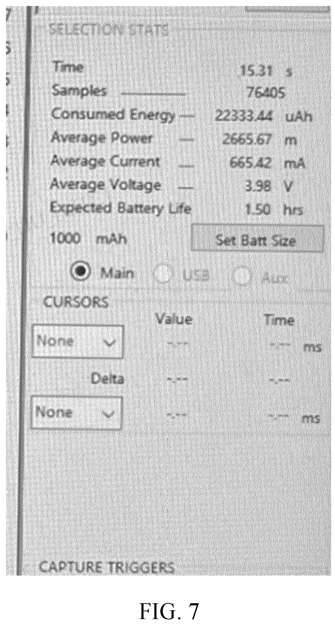

6 and FIG. 7.

FIG. 4 and FIG. 6 are merely examples of some data, where the horizontal axis is the sampling points, and the vertical axis is the current data corresponding to the sampling points. FIG. 5 is the statistical value corresponding to the data as shown in FIG. 4, and FIG. 7 is the statistical value corresponding to the data as shown in FIG. 6, wherein Average Power is the average power, Average Current is the average current, and Average Voltage is the average voltage. From the data in FIG.s 5 and 7, it can be clearly seen that under the same average voltage, the average current and the average power in FIG. 7 are less than the corresponding average current and average power in FIG. 5, indicating that the method in this embodiment significantly reduces power consumption.

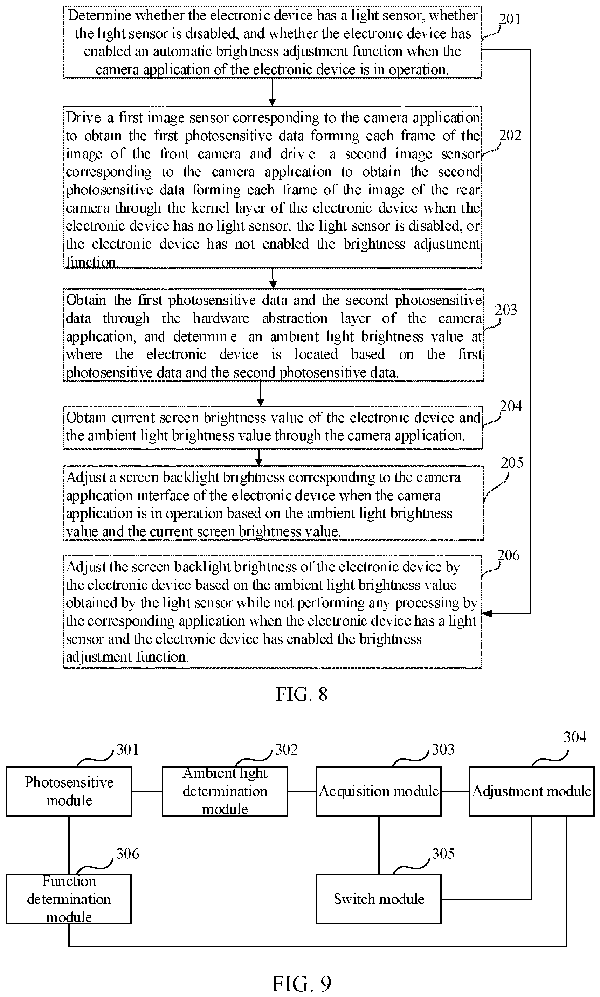

FIG. 8 is a flowchart of the screen brightness adjustment method according to another embodiment of the present disclosure. The screen brightness adjustment method includes the following steps.

201. When the camera application of the electronic device is in operation, determine whether the electronic device has a light sensor, whether the light sensor is disabled when it exists, and whether the electronic device has enabled an automatic brightness adjustment function.

The system of the electronic device stores an existence parameter indicating whether there is a light sensor, a usage parameter indicating whether the light sensor is used when it exists, and an automatic brightness parameter indicating whether the electronic device has enabled the automatic brightness adjustment function (such as auto brightness). For example, in the existence parameter, 0 indicates no light sensor while 1 indicates the presence of a light sensor; in the usage parameter, 0 indicates the light sensor is disabled while 1 indicates the light sensor is used; in the automatic brightness parameter, 0 indicates the automatic brightness adjustment function is turned off, 1 indicates the automatic brightness adjustment function is turned on. The existence parameter, the usage parameter, and the automatic brightness parameter of the electronic device can be quickly obtained through the camera application to determine whether the electronic device has a light sensor, whether the light sensor is disabled when it exists, and whether the electronic device has enabled the automatic brightness adjustment function.

202. When the electronic device has no light sensor, the light sensor is disabled, or the electronic device has not enabled the brightness adjustment function, drive a first image sensor corresponding to the camera application to obtain the first photosensitive data forming each frame of the image of the front camera, and drive a second image sensor corresponding to the camera application to obtain the second photosensitive data forming each frame of the image of the rear camera through the kernel layer of the electronic device.

In this embodiment, the electronic device sets the first image sensor for the front camera and the second image sensor for the rear camera. The first image sensor and the second image sensor have the same function, both obtaining the photosensitive data forming each frame of the image. The first image sensor and the second image sensor are not depth sensors.

203. Obtain the first photosensitive data and the second photosensitive data through the hardware abstraction layer of the camera application, and determine an ambient light brightness value at where the electronic device is located based on the first photosensitive data and the second photosensitive data.

For example, the first photosensitive data and the second photosensitive data are weighted and summed to obtain a weighted sum thereof, and the ambient light brightness value at where the electronic device is located is determined based on the photosensitive data obtained by the weighted sum, or the first photosensitive data and the second photosensitive data are averaged to obtain an average ambient light brightness value, and the average ambient light brightness value is determined as the ambient light brightness value at where the electronic device is located, or the ambient light brightness value at where the electronic device is located is determined based on the first photosensitive data and the second photosensitive data through other means.

204. Obtain current screen brightness value of the electronic device and the ambient light brightness value through the camera application.

Adjust a screen backlight brightness corresponding to the camera application interface of the electronic device when the camera application is in operation based on the ambient light brightness value and the current screen brightness value, such as the camera backlight scaling as shown in FIG. 2.

206. When the electronic device has a light sensor and the electronic device has enabled the brightness adjustment function, the corresponding application does not perform any processing, and the electronic device adjusts the screen backlight brightness of the electronic device based on the ambient light brightness value obtained by the light sensor.

When the electronic device has a light sensor and the electronic device has enabled the brightness adjustment function, the brightness adjustment function provided by the electronic device itself is used to adjust the screen backlight brightness when using the camera application, that is, the electronic device adjusts the screen backlight brightness of the electronic device based on the ambient light brightness value obtained by the light sensor, and the camera application does not perform any processing (no change).

For those steps not described in detail above, please refer to the corresponding steps described earlier, which will not be repeated here.

Based on the method described in the above embodiments, the embodiment will be further described from the perspective of a screen brightness adjustment device. The screen brightness adjustment device can be implemented as an independent entity or integrated into an electronic device.

Please refer to FIG. 9, FIG. 9 illustrates a screen brightness adjustment device according to an embodiment of the present disclosure. The screen brightness adjustment device is applied to an electronic device, in which the electronic device comprises an application layer, an application framework layer, and a kernel layer. The screen brightness adjustment device comprises: a photosensitive module 301, an ambient light determination module 302, an acquisition module 303, and an adjustment module 304.

The photosensitive module 301 is configured to drive an image sensor corresponding to a camera application through the kernel layer of the electronic device to obtain photosensitive data forming each frame of the image when the camera application of the electronic device is in operation.

The ambient light determination module 302 is configured to obtain the photosensitive data through a hardware abstraction layer of the camera application and determine an ambient light brightness value of the electronic device based on the photosensitive data.

The acquisition module 303 is configured to obtain current screen brightness value of the electronic device and the ambient light brightness value through the camera application.

The adjustment module 304 is configured to adjust the screen backlight brightness corresponding to the camera application interface of the electronic device when the camera application is in operation based on the ambient light brightness value and the current screen brightness value.

In one embodiment, an ambient determination module 302 is configured for: adding communication parameters in the hardware abstraction layer, the communication parameters communicating with the camera application; obtaining the photosensitive data of the kernel layer through the hardware abstraction layer of the camera application; extracting an exposure value from the photosensitive data using the hardware abstraction layer to obtain the ambient light brightness value at where the electronic device is located; and assigning the ambient light brightness value to the communication parameters. The acquisition module 303 is configured for accessing the communication parameters of the hardware abstraction layer through the camera application to obtain the ambient light brightness value.

In one embodiment, the photosensitive data comprises first photosensitive data corresponding to a front camera. The ambient determination module 302 is configured for determining the ambient light brightness value at where the electronic device is located based on the first photosensitive data.

In one embodiment, the photosensitive data comprises the first photosensitive data corresponding to the front camera and second photosensitive data corresponding to a rear camera. The ambient determination module 302 is configured for determining the ambient light brightness value at where the electronic device is located based on the first photosensitive data and the second photosensitive data.

In one embodiment, the ambient determination module 302 is configured for: extracting an exposure value from the first photosensitive data using the hardware abstraction layer of the camera application to obtain a first ambient light brightness value corresponding to the front camera; extracting an exposure value from the second photosensitive data using the hardware abstraction layer of the camera application to obtain a second ambient light brightness value corresponding to the rear camera; and determining a maximum ambient light brightness value among the first ambient light brightness value and the second ambient light brightness value as the ambient light brightness value at where the electronic device is located. Correspondingly, the screen brightness adjustment device further comprises a switching module 305 configured for switching the current front camera of the electronic device to a camera corresponding to the maximum ambient light brightness value.

In one embodiment, the adjustment module 304 is configured for: determining whether the current screen brightness value is greater than a minimum screen brightness value; when the current screen brightness value is not greater than the minimum screen brightness value, adjusting the screen backlight brightness corresponding to the camera application interface of the electronic device when the camera application is in operation to the minimum screen brightness value; and when the current screen brightness value is greater than the minimum screen brightness value, linearly adjusting or non-linearly adjusting the screen backlight brightness corresponding to the camera application interface of the electronic device when the camera application is in operation based on the ambient light brightness value.

In one embodiment, the adjustment module 304 is configured for: when the ambient light brightness value is less than or equal to a first preset ambient light brightness value, adjusting the screen backlight brightness corresponding to the camera application interface of the electronic device when the camera application is in operation to the minimum screen brightness value; when the ambient light brightness value is between the first preset ambient light brightness value and a second preset ambient light brightness value, linearly adjusting the screen backlight brightness corresponding to the camera application interface of the electronic device when the camera application is in operation according to a preset formula; wherein the second preset ambient light brightness value is greater than the first preset ambient light brightness value; and when the ambient light brightness value is greater than or equal to the second preset ambient light brightness value, adjusting the screen backlight brightness corresponding to the camera application interface of the electronic device when the camera application is in operation to the current screen brightness value.

In one embodiment, the screen brightness adjustment device further comprising a function determination module 306 configured for determining whether the electronic device has a light sensor, whether the light sensor is disabled, and whether the electronic device has enabled an automatic brightness adjustment function. When the electronic device has no light sensor or the light sensor is disabled or the electronic device has not enabled a brightness adjustment function, enable the photosensitive module 301. When the electronic device has the light sensor and the electronic device has enabled the brightness adjustment function, triggering an adjustment module 304 which is configured for adjusting the screen backlight brightness of the electronic device according to the light sensor by the electronic device so that the camera application does not perform any processing.

In implementation, the above modules can be implemented as independent entities, or can be arbitrarily combined to be implemented as the same or several entities. The specific implementation of the above modules can refer to the previous method embodiments. The specific beneficial effects that can be achieved can also refer to the beneficial effects in the previous method embodiments, which will not be repeated here.

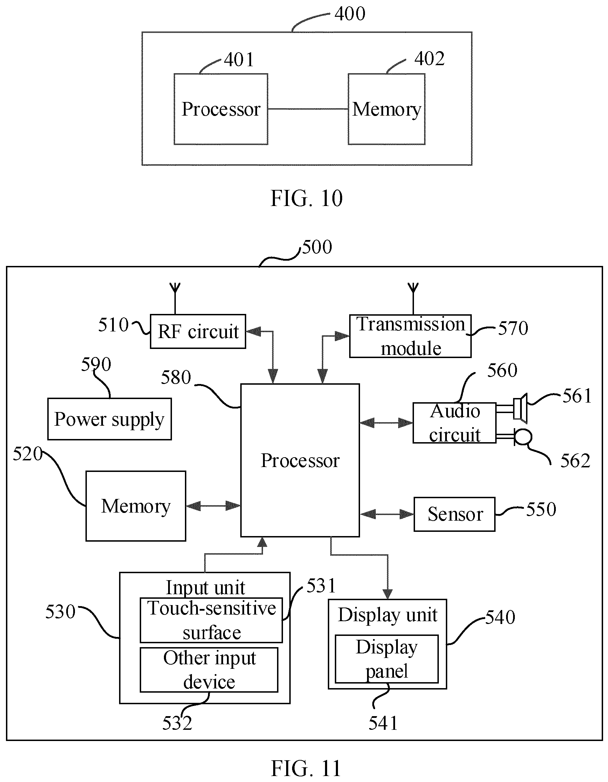

In addition, an embodiment of the present disclosure further provides an electronic device 400 as illustrated in FIG. 10. The electronic device 400 includes a processor 401 and a memory 402. At least one application is installed in the electronic device. The processor 401 is electrically connected to the memory 402.

The processor 401 is the control center of the electronic device 400. The processor 401 uses various interfaces and lines to connect various parts of the entire electronic device. It executes various functions of the electronic device and processes data by running or loading applications stored in the memory 402 and calling data stored in the memory 402, thereby monitoring the electronic device as a whole.

In this embodiment, the processor 401 in the electronic device 400 will load the instructions corresponding to the processes of one or more applications into the memory 402. The processor 401 will run the application/computer program stored in the memory 402 to perform operations comprising:

when a camera application of the electronic device is in operation, driving an image sensor corresponding to the camera application through a kernel layer of the electronic device to obtain photosensitive data forming each frame of an image; obtaining the photosensitive data through a hardware abstraction layer of the camera application, and determining an ambient light brightness value at where the electronic device is located based on the photosensitive data; obtaining current screen brightness value of the electronic device and the ambient light brightness value through the camera application; and adjusting a screen backlight brightness corresponding to a camera application interface of the electronic device when the camera application is in operation based on the ambient light brightness value and the current screen brightness value.

The electronic device can implement the steps in any embodiment of the screen brightness adjustment method provided in the embodiments of the present disclosure. Therefore, it can achieve the beneficial effects that can be achieved by any screen brightness adjustment method provided in the embodiments of the present disclosure. Please refer to the previous embodiments for details and will not be repeated here.

Please refer to FIG. 11 illustrating a block diagram of an electronic device according to another embodiment of the present disclosure. The electronic device can perform the screen brightness adjustment method provided in the embodiments of the present disclosure. The electronic device includes a radio frequency (RF) circuit 510, a memory 520 including one or more (only one is shown in the figure) computer-readable storage media, an input unit 530, a display unit 540, a sensor 550, an audio circuit 560, a transmission module 570, a processor 580 including one or more (only one is shown in the figure) processing cores, and a power supply 590, etc. Those skilled in the art would understand that the electronic device is not limited to the structure of the electronic device shown in FIG. 11. The electronic device may comprise more or less components than those illustrated in the figure, or some components may be combined, or the electronic device may have different component arrangements.

The RF circuit 510 may be configured to receive and send a signal during an information receiving and sending process or a conversation process. Specifically, after receiving downlink information from a base station, the RF circuit 510 delivers the downlink information to one or more processors 180 for processing, and sends related uplink data to the base station. Generally, the RF circuit 510 includes, but is not limited to, an antenna, at least one amplifier, a tuner, one or more oscillators, a subscriber identity module (SIM) card, a transceiver, a coupler, a low noise amplifier (LNA), and a duplexer. In addition, the RF circuit 510 may also communicate with a network and another device by wireless communication. The wireless communication may use any communications standard or protocol, which includes, but is not limited to, Global System of Mobile Communication (GSM), General Packet Radio Service (GPRS), Code Division Multiple Access (CDMA), Wideband Code Division Multiple Access (WCDMA, Wideband Code Division Multiple Access), Long Term Evolution (LTE), E-mail, Short Messaging Service (SMS), etc.

The memory 520 may be configured to store a software program and module. The processor 580 runs the software program and module stored in the memory 520, to implement various functional applications and data processing. The memory 520 may mainly include a program storage area and a data storage area. The program storage area may store an operating system, an application program required by at least one function (such as a sound playback function and an image display function), and the like. The data storage area may store data (such as audio data and an address book) created according to use of the electronic device, and the like. In addition, the memory 520 may include a high speed random access memory, and may also include a nonvolatile memory, such as at least one magnetic disk storage device, a flash memory device, or another volatile solid-state storage device. Correspondingly, the memory 520 may further include a memory controller, so that the processor 580 and the input unit 530 access the memory 520.

The input unit 530 may be configured to receive input digit or character information, and generate keyboard, mouse, joystick, optical, or track ball signal input related to the user setting and function control. Specifically, the input unit 530 may include a touch-sensitive surface 531 and other input device 532. The touch-sensitive surface 531 may also be referred to as a touch screen or a touch panel, and may collect a touch operation of a user on or near the touch-sensitive surface (such as an operation of a user on or near the touch-sensitive surface by using any suitable object or attachment, such as a finger or a stylus), and drive a corresponding connection apparatus according to a preset program. Optionally, the touch-sensitive surface 531 may include two parts: a touch detection apparatus and a touch controller. The touch detection apparatus detects a touch position of the user, detects a signal generated by the touch operation, and transfers the signal to the touch controller. The touch controller receives the touch information from the touch detection apparatus, converts the touch information into touch point coordinates, and sends the touch point coordinates to the processor 580. Moreover, the touch controller can receive and execute a command sent from the processor 580. In addition, the touch-sensitive surface 531 may be implemented by using various types, such as a resistive type, a capacitance type, an infrared type, and a surface sound wave type. In addition to the touch-sensitive surface, the input unit 530 may further include the another input device 532. Specifically, the another input device may include, but is not limited to, one or more of a physical keyboard, a functional key (such as a volume control key or a switch key), a track ball, a mouse, and a joystick.

The display unit 540 may be configured to display information input by the user or information provided for the user, and various graphical user ports of the electronic device. The graphical user ports may be formed by a graph, a text, an icon, a video, and any combination thereof. The display unit 540 may include a display panel 541. Optionally, the display panel 541 may be configured by using a liquid crystal display (LCD), an organic light-emitting diode (OLED), or the like.

Further, the touch-sensitive surface may cover the display panel. After detecting a touch operation on or near the touch-sensitive surface, the touch-sensitive surface transfers the touch operation to the processor 580, so as to determine a type of a touch event. Then, the processor 580 provides corresponding visual output on the display panel according to the type of the touch event. Although, in FIG. 11, the touch-sensitive surface and the display panel are used as two separate parts to implement input and output functions, in some embodiments, the touch-sensitive surface and the display panel may be integrated to implement the input and output functions.

The electronic device may further include at least one sensor 550, such as an optical sensor, a motion sensor, and other sensors. Specifically, the optical sensor may include an ambient light sensor and a proximity sensor. The ambient light sensor may adjust luminance of the display panel 141 according to brightness of the ambient light. The proximity sensor may switch off the display panel 141 and/or backlight when the electronic device is moved to the ear. As one type of motion sensor, a gravity acceleration sensor may detect magnitude of accelerations at various directions (which generally are triaxial), may detect magnitude and a direction of the gravity when static, and may be configured to identify an application of a mobile phone attitude (such as switching between horizontal and vertical screens, a related game, and attitude calibration of a magnetometer), a related function of vibration identification (such as a pedometer and a knock). Other sensors, such as a gyroscope, a barometer, a hygrometer, a thermometer, and an infrared sensor, which may be configured in the electronic device are not further described herein.

The audio circuit 560, a loudspeaker 561, and a microphone 562 may provide audio interfaces between the user and the electronic device. The audio circuit 560 may transmit, to the loudspeaker, a received electric signal converted from received audio data. The loudspeaker 561 converts the electric signal into a sound signal for output. On the other hand, the microphone 562 converts a collected sound signal into an electric signal. The audio circuit 560 receives the electric signal and converts the electric signal into audio data, and outputs the audio data to the processor 580 for processing. Then, the processor 580 sends the audio data to, for example, another terminal by using the RF circuit 510, or outputs the audio data to the memory 520 for further processing. The audio circuit 560 may further include an earplug jack, so as to provide communication between a peripheral earphone and the electronic device.

The electronic device 500 uses the transmission module 570 (e.g. Wi Fi module) to send and receive email, browse the web and access streaming media. The transmission module 570 provides users with wireless broadband Internet access. Although FIG. 11 shows the transmission module 570, it is understandable that it is not a necessary component of an electronic device and can be omitted as necessary without altering the nature of the invention.

The processor 580 is a control center of the electronic device, and connects various parts of the terminal by using various interfaces and lines. By running or executing the software program and/or module stored in the memory 520, and invoking data stored in the memory 520, the processor 580 performs various functions and data processing of the electronic device, thereby performing overall monitoring on the mobile phone. Optionally, the processor 580 may include one or more processing cores. Preferably, the processor 580 may integrate an application processor and a modem. The application processor mainly processes an operating system, a user interface, an application program, and the like. The modem mainly processes wireless communication. It may be understood that, the foregoing modem may not be integrated into the processor 580.

The electronic device further includes the power supply 590 (such as a battery) for supplying power to the components. Preferably, the power supply may be logically connected to the processor 580 by using a power supply management system, thereby implementing functions, such as charging, discharging, and power consumption management, by using the power supply management system. The power supply 590 may further include any component, such as one or more direct current or alternate current power supplies, a re-charging system, a power supply fault detection circuit, a power supply converter or an inverter, and a power supply state indicator.

The electronic device may further comprise a camera (such as a front camera, a rear camera), a Bluetooth module, and the like, and a description in this regard is not provided. In greater detail, a display unit of the mobile terminal is a touch screen display according to the present embodiment. The mobile terminal further comprises a memory and one or more programs. The one or one or more programs are stored in the memory, and are configured to be executed by one or more processors to perform operations of:

when a camera application of the electronic device is in operation, driving an image sensor corresponding to the camera application through a kernel layer of the electronic device to obtain photosensitive data forming each frame of an image; obtaining the photosensitive data through a hardware abstraction layer of the camera application, and determining an ambient light brightness value at where the electronic device is located based on the photosensitive data; obtaining current screen brightness value of the electronic device and the ambient light brightness value through the camera application; adjusting a screen backlight brightness corresponding to a camera application interface of the electronic device when the camera application is in operation based on the ambient light brightness value and the current screen brightness value.

In specific implementation, the above modules can be implemented as independent entities, or can be arbitrarily combined and implemented as the same or several entities. The specific implementation of the above modules can be found in the previous method embodiments, which will not be repeated here.

A person skilled in the art may understand that all or part of the steps in the various methods of the above embodiments may be completed by instructions or by hardware controlled by related instructions. The instructions may be stored in a computer-readable storage medium and loaded and executed by a processor. For this purpose, an embodiment of the present disclosure provides a computer-readable storage medium in which a plurality of instructions are stored capable of being loaded by a processor to perform steps in any of the method for adjusting screen brightness provided in the embodiment of the present disclosure.

The computer readable storage medium may include: Read Only Memory (ROM), Random Access Memory (RAM), disk or optical disc, etc.

A method for adjusting screen brightness, apparatus, electronic device and storage medium provided in the embodiment of the present disclosure are described in detail above. The above embodiments of the present disclosure are described in detail, and the principle and embodiment of the present disclosure are elaborated in this article by applying specific examples, and the description of the above embodiments is only used to help understand the technical scheme of the present disclosure and its core ideas A person skilled in the art should understand that he may still modify the technical solutions recorded in the foregoing embodiments, or replace some of the technical features therein. And these modifications or substitutions do not make the essence of the corresponding technical solutions out of the scope of the technical solutions of the embodiments of the present disclosure.

**Claims**

1. A method for adjusting screen brightness, applied to an electronic device, comprising:

   when a camera application of the electronic device is in operation, driving an image sensor corresponding to the camera application through a kernel layer of the electronic device to obtain photosensitive data forming each frame of an image;
   obtaining the photosensitive data through a hardware abstraction layer of the camera application, and determining an ambient light brightness value at where the electronic device is located based on the photosensitive data;
   obtaining current screen brightness value of the electronic device and the ambient light brightness value through the camera application; and
   adjusting a screen backlight brightness corresponding to a camera application interface of the electronic device when the camera application is in operation based on the ambient light brightness value and the current screen brightness value.

2. The method of claim 1, wherein the step of obtaining the photosensitive data through the hardware abstraction layer of the camera application and determining the ambient light brightness value at where the electronic device is located based on the photosensitive data comprises:

   adding communication parameters in the hardware abstraction layer, the communication parameters communicating with the camera application;
   obtaining the photosensitive data of the kernel layer through the hardware abstraction layer of the camera application;
   extracting an exposure value from the photosensitive data using the hardware abstraction layer to obtain the ambient light brightness value at where the electronic device is located; and
   assigning the ambient light brightness value to the communication parameters; and
   the step of obtaining the ambient light brightness value through the camera application comprises: accessing the communication parameters of the hardware abstraction layer through the camera application to obtain the ambient light brightness value.

3. The method of claim 1, wherein the photosensitive data comprises first photosensitive data corresponding to a front camera; and the step of determining the ambient light brightness value at where the electronic device is located based on the photosensitive data comprises: determining the ambient light brightness value at where the electronic device is located based on the first photosensitive data;
   or,
   the photosensitive data comprises the first photosensitive data corresponding to the front camera and second photosensitive data corresponding to a rear camera; the step of determining the ambient light brightness value at where the electronic device is located based on the photosensitive data comprising: determining the ambient light brightness value at where the electronic device is located based on the first photosensitive data and the second photosensitive data.

4. The method of claim 3, wherein the step of determining the ambient light brightness value at where the electronic device is located based on the first photosensitive data and the second photosensitive data comprises:

extracting an exposure value from the first photosensitive data using the hardware abstraction layer of the camera application to obtain a first ambient light brightness value corresponding to the front camera;

extracting an exposure value from the second photosensitive data using the hardware abstraction layer of the camera application to obtain a second ambient light brightness value corresponding to the rear camera; and

determining a maximum ambient light brightness value among the first ambient light brightness value and the second ambient light brightness value as the ambient light brightness value at where the electronic device is located;

the method further comprising: switching the current front camera of the electronic device to a camera corresponding to the maximum ambient light brightness value.

5. The method of claim 1, wherein the step of adjusting the screen backlight brightness corresponding to the camera application interface of the electronic device when the camera application is in operation based on the ambient light brightness value and the current screen brightness value comprises:

determining whether the current screen brightness value is greater than a minimum screen brightness value;

when the current screen brightness value is not greater than the minimum screen brightness value, adjusting the screen backlight brightness corresponding to the camera application interface of the electronic device when the camera application is in operation to the minimum screen brightness value; and

when the current screen brightness value is greater than the minimum screen brightness value, linearly adjusting or non-linearly adjusting the screen backlight brightness corresponding to the camera application interface of the electronic device when the camera application is in operation based on the ambient light brightness value.

6. The method of claim 5, wherein the step of linearly adjusting the screen backlight brightness corresponding to the camera application interface of the electronic device when the camera application is in operation based on the ambient light brightness value comprises:

when the ambient light brightness value is less than or equal to a first preset ambient light brightness value, adjusting the screen backlight brightness corresponding to the camera application interface of the electronic device when the camera application is in operation to the minimum screen brightness value;

when the ambient light brightness value is between the first preset ambient light brightness value and a second preset ambient light brightness value, linearly adjusting the screen backlight brightness corresponding to the camera application interface of the electronic device when the camera application is in operation according to a preset formula; wherein the second preset ambient light brightness value is greater than the first preset ambient light brightness value; and

when the ambient light brightness value is greater than or equal to the second preset ambient light brightness value, adjusting the screen backlight brightness corresponding to the camera application interface of the electronic device when the camera application is in operation to the current screen brightness value.

7. The method of claim 1, wherein before the step of driving the image sensor corresponding to the camera application through the kernel layer of the electronic device to obtain the photosensitive data forming each frame of the image, the method further comprises:

determining whether the electronic device has a light sensor, whether the light sensor is disabled, and whether the electronic device has enabled an automatic brightness adjustment function;

when the electronic device has no light sensor or the light sensor is disabled or the electronic device has not enabled a brightness adjustment function, performing the step of driving the image sensor corresponding to the camera application through the kernel layer of the electronic device to obtain the photosensitive data forming each frame of the image; and

when the electronic device has the light sensor and the electronic device has enabled the brightness adjustment function, the camera application not performing any processing, and adjusting the screen backlight brightness of the electronic device according to the light sensor by the electronic device.

8. The method of claim 3, wherein the step of determining the ambient light brightness value at where the electronic device is located based on the first photosensitive data and the second photosensitive data comprises:

extracting an exposure value from the first photosensitive data using the hardware abstraction layer of the camera application to obtain a first ambient light brightness value corresponding to the front camera;

extracting an exposure value from the second photosensitive data using the hardware abstraction layer of the camera application to obtain a second ambient light brightness value corresponding to the rear camera; and

performing a weighted summation of the first ambient light brightness value and the second ambient light brightness value to obtain a weighted sum thereof, and determining the ambient light brightness value obtained by the weighted sum as the ambient light brightness value at where the electronic device is located.

9. The method of claim 3, wherein the step of determining the ambient light brightness value at where the electronic device is located based on the first photosensitive data and the second photosensitive data comprises:

extracting an exposure value from the first photosensitive data using the hardware abstraction layer of the camera application to obtain a first ambient light brightness value corresponding to the front camera;

extracting an exposure value from the second photosensitive data using the hardware abstraction layer of the camera application to obtain a second ambient light brightness value corresponding to the rear camera; and

determining a smaller ambient light brightness value among the first ambient light brightness value and the second ambient light brightness value as the ambient light brightness value at where the electronic device is located.

10. The method of claim 6, wherein the step of linearly adjusting the screen backlight brightness corresponding to the camera application interface of the electronic device when the camera application is in operation according to the preset formula comprises: linearly adjusting the screen backlight brightness corresponding to the camera application interface of the electronic device when the camera application is in operation according to the preset formula $BL = LV*(s-min)/(b-a) + (b*min-s*a)/b-a$, wherein BL is the screen backlight brightness, LV is the ambient light brightness value, s is the current screen brightness value, min is the minimum screen brightness value, b is the second preset ambient light brightness value, and a is the first preset ambient light brightness value.

11. The method of claim 3, further comprising: obtaining the first photosensitive data corresponding to the front camera and the second photosensitive data corresponding to the rear camera through a same image sensor; or, obtaining the first photosensitive data corresponding to the front camera through a first image sensor, and obtaining the second photosensitive data corresponding to the rear camera through a second image sensor.

12. A screen brightness adjustment device, applied to an electronic device, comprising:

a photosensitive module configured for, when a camera application of the electronic device is in operation, driving an image sensor corresponding to the camera application through a kernel layer of the electronic device to obtain photosensitive data forming each frame of an image;

an ambient determination module, configured for obtaining the photosensitive data through a hardware abstraction layer of the camera application, and determining an ambient light brightness value at where the electronic device is located based on the photosensitive data;

an acquisition module, configured for obtaining current screen brightness value of the electronic device and the ambient light brightness value through the camera application; and

an adjustment module, configured for adjusting a screen backlight brightness corresponding to a camera application interface of the electronic device when the camera application is in operation based on the ambient light brightness value and the current screen brightness value.

13. The screen brightness adjustment device of claim 12, wherein the ambient determination module is configured for: adding communication parameters in the hardware abstraction layer, the communication parameters communicating with the camera application; obtaining the photosensitive data of the kernel layer through the hardware abstraction layer of the camera application; extracting an exposure value from the photosensitive data using the hardware abstraction layer to obtain the ambient light brightness value at where the electronic device is located; and assigning the ambient light brightness value to the communication parameters; and the acquisition module is configured for accessing the communication parameters of the hardware abstraction layer through the camera application to obtain the ambient light brightness value.

14. The screen brightness adjustment device of claim 12, wherein the photosensitive data comprises first photosensitive data corresponding to a front camera; and the ambient determination module is configured for determining the ambient light brightness value at where the electronic device is located based on the first photosensitive data; or the photosensitive data comprises the first photosensitive data corresponding to the front camera and second photosensitive data corresponding to a rear camera; the ambient determination module is configured for determining the ambient light brightness value at where the electronic device is located based on the first photosensitive data and the second photosensitive data.

15. The screen brightness adjustment device of claim 14, wherein ambient determination module is configured for: extracting an exposure value from the first photosensitive data using the hardware abstraction layer of the camera application to obtain a first ambient light brightness value corresponding to the front camera; extracting an exposure value from the second photosensitive data using the hardware abstraction layer of the camera application to obtain a second ambient light brightness value corresponding to the rear camera; and determining a maximum ambient light brightness value among the first ambient light brightness value and the second ambient light brightness value as the ambient light brightness value at where the electronic device is located; the screen brightness adjustment device further comprises a switching module configured for switching the current front camera of the electronic device to a camera corresponding to the maximum ambient light brightness value.

16. The screen brightness adjustment device of claim 12, wherein the adjustment module is configured for: determining whether the current screen brightness value is greater than a minimum screen brightness value; when the current screen brightness value is not greater than the minimum screen brightness value, adjusting the screen backlight brightness corresponding to the camera application interface of the electronic device when the camera application is in operation to the minimum screen brightness value; and when the current screen brightness value is greater than the minimum screen brightness value, linearly adjusting or non-linearly adjusting the screen backlight brightness corresponding to the camera application interface of the electronic device when the camera application is in operation based on the ambient light brightness value.

17. The screen brightness adjustment device of claim 16, wherein the adjustment module is configured for: when the ambient light brightness value is less than or equal to a first preset ambient light brightness value, adjusting the screen backlight brightness corresponding to the camera application interface of the electronic device when the camera application is in operation to the minimum screen brightness value; when the ambient light brightness value is between the first preset ambient light brightness value and a second preset ambient light brightness value, linearly adjusting the screen backlight brightness corresponding to the camera application interface of the electronic device when the camera application is in operation according to a preset formula; wherein the second preset ambient light brightness value is greater than the first preset ambient light brightness value; and when the ambient light brightness value is greater than or equal to the second preset ambient light brightness value, adjusting the screen backlight brightness corresponding to the camera application interface of the electronic device when the camera application is in operation to the current screen brightness value.

18. The screen brightness adjustment device of claim 12, further comprising a function determination module configured for determining whether the electronic device has a light sensor, whether the light sensor is disabled, and whether the electronic device has enabled an automatic brightness adjustment function; and

   when the electronic device has no light sensor or the light sensor is disabled or the electronic device has not enabled a brightness adjustment function, driving the image sensor corresponding to the camera application through the kernel layer of the electronic device to obtain the photosensitive data forming each frame of the image; and
   when the electronic device has the light sensor and the electronic device has enabled the brightness adjustment function, triggering an adjustment module which is configured for adjusting the screen backlight brightness of the electronic device according to the light sensor by the electronic device so that the camera application does not perform any processing.

19. A computer-readable storage medium storing a plurality of instructions executable by the processor to perform the method of any one of claims 1 to 11.

20. An electronic device, comprising a processor and a memory storing an application executable by the processor to perform the method of any one of claims 1 to 11.

Drive an image sensor corresponding to a camera application through a kernel layer of an electronic device to obtain photosensitive data forming each frame of an image when the camera application of the electronic device is in operation.
101

Obtain the photosensitive data through a hardware abstraction layer of the camera application, and determine an ambient light brightness value at where the electronic device is located based on the photosensitive data.
102

Obtain current screen brightness value of the electronic device and the ambient light brightness value through the camera application.
103

Adjust a screen backlight brightness corresponding to a camera application interface of the electronic device when the camera application is in operation based on the ambient light brightness value and the current screen brightness value.
104

FIG. 1

FIG. 2

FIG. 3

FIG. 4

FIG. 5

FIG. 6

FIG. 7

Determine whether the electronic device has a light sensor, whether the light sensor is disabled, and whether the electronic device has enabled an automatic brightness adjustment function when the camera application of the electronic device is in operation. 201

Drive a first image sensor corresponding to the camera application to obtain the first photosensitive data forming each frame of the image of the front camera and drive a second image sensor corresponding to the camera application to obtain the second photosensitive data forming each frame of the image of the rear camera through the kernel layer of the electronic device when the electronic device has no light sensor, the light sensor is disabled, or the electronic device has not enabled the brightness adjustment function. 202

Obtain the first photosensitive data and the second photosensitive data through the hardware abstraction layer of the camera application, and determine an ambient light brightness value at where the electronic device is located based on the first photosensitive data and the second photosensitive data. 203

Obtain current screen brightness value of the electronic device and the ambient light brightness value through the camera application. 204

Adjust a screen backlight brightness corresponding to the camera application interface of the electronic device when the camera application is in operation based on the ambient light brightness value and the current screen brightness value. 205

Adjust the screen backlight brightness of the electronic device by the electronic device based on the ambient light brightness value obtained by the light sensor while not performing any processing by the corresponding application when the electronic device has a light sensor and the electronic device has enabled the brightness adjustment function. 206

FIG. 8

| Photosensitive module 301 | Ambient light determination module 302 | Acquisition module 303 | Adjustment module 304 |

| Function determination module 306 | | Switch module 305 | |

FIG. 9

400

401

Processor

402

Memory

FIG. 10

500

510 RF circuit

Transmission module 570

590

Power supply

580

560

Audio circuit 561

562

520

Memory

Processor

550 Sensor

530

Input unit

Touch-sensitive surface 531

Other input device

532

Display unit 540

Display panel

541

FIG. 11

## INTERNATIONAL SEARCH REPORT

| | International application No. |
|---|---|
| | **PCT/CN2023/103029** |

**A.    CLASSIFICATION OF SUBJECT MATTER**

G09G3/3208(2016.01)i;  G09G3/36(2006.01)i

According to International Patent Classification (IPC) or to both national classification and IPC

**B.    FIELDS SEARCHED**

Minimum documentation searched (classification system followed by classification symbols)

IPC:  G09G

Documentation searched other than minimum documentation to the extent that such documents are included in the fields searched

Electronic data base consulted during the international search (name of data base and, where practicable, search terms used)

CNTXT, ENTXTC, VEN, WPABSC, CNKI: 刘俊婷, TCL, 云创, 无, 没, 不设, 禁用, 光传感, 摄像, 相机, 图像传感, 应用, 程序, 界面, 打开, 启动, 运行, 不大于, 小于, 画面, 环境, 面板, 屏幕, 亮度, 强度, 照度, 最小, APP, application, ambient, BL, screen, brightness, light, LV, min, preset, adjust+

**C.    DOCUMENTS CONSIDERED TO BE RELEVANT**

| Category* | Citation of document, with indication, where appropriate, of the relevant passages | Relevant to claim No. |
|---|---|---|
| Y | CN 104618588 A (SHENZHEN GIONEE COMMUNICATION EQUIPMENT CO., LTD.) 13 May 2015 (2015-05-13)<br>      description, paragraphs [0019]-[0118], and figures 1-5 | 1-5, 7-9, 11-16, 18-20 |
| Y | CN 107645606 A (NUBIA TECHNOLOGY CO., LTD.) 30 January 2018 (2018-01-30)<br>      description, paragraphs [0059]-[0206], and figures 1-9 | 1-5, 7-9, 11-16, 18-20 |
| A | CN 105575360 A (ALIBABA GROUP HOLDING LIMITED) 11 May 2016 (2016-05-11)<br>      entire document | 1-20 |
| A | CN 105702228 A (HUIZHOU DESAY SV AUTOMOTIVE CO., LTD.) 22 June 2016 (2016-06-22)<br>      entire document | 1-20 |
| A | CN 106775260 A (GUANGZHOU HENGYE SOFTWARE TECHNOLOGY CO., LTD.) 31 May 2017 (2017-05-31)<br>      entire document | 1-20 |

☑ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 September 2023** | **22 September 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/103029** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 106851007 A (HUIZHOU TCL MOBILE COMMUNICATION CO., LTD.) 13 June 2017 (2017-06-13)<br>entire document | 1-20 |
| A | CN 110211549 A (SHENZHEN TECNO TECHNOLOGY CO., LTD.) 06 September 2019 (2019-09-06)<br>entire document | 1-20 |
| A | KR 20050080365 A (LG ELECTRONICS INC.) 12 August 2005 (2005-08-12)<br>entire document | 1-20 |
| A | WO 2019192044 A1 (HUAWEI TECHNOLOGIES CO., LTD.) 10 October 2019 (2019-10-10)<br>entire document | 1-20 |

Form PCT/ISA/210 (second sheet) (July 2022)

**INTERNATIONAL SEARCH REPORT**
Information on patent family members

International application No.

**PCT/CN2023/103029**

| Patent document cited in search report | | | Publication date (day/month/year) | Patent family member(s) | | | Publication date (day/month/year) |
|---|---|---|---|---|---|---|---|
| CN | 104618588 | A | 13 May 2015 | None | | | |
| CN | 107645606 | A | 30 January 2018 | CN | 107645606 | B | 05 February 2021 |
| CN | 105575360 | A | 11 May 2016 | None | | | |
| CN | 105702228 | A | 22 June 2016 | CN | 105702228 | B | 07 August 2018 |
| CN | 106775260 | A | 31 May 2017 | None | | | |
| CN | 106851007 | A | 13 June 2017 | None | | | |
| CN | 110211549 | A | 06 September 2019 | None | | | |
| KR | 20050080365 | A | 12 August 2005 | None | | | |
| WO | 2019192044 | A1 | 10 October 2019 | KR | 20200133383 | A | 27 November 2020 |
| | | | | KR | 102434930 | B1 | 19 August 2022 |
| | | | | JP | 2021518722 | A | 02 August 2021 |
| | | | | JP | 7142715 | B2 | 27 September 2022 |
| | | | | US | 2021027746 | A1 | 28 January 2021 |
| | | | | US | 11250813 | B2 | 15 February 2022 |
| | | | | CN | 111345019 | A | 26 June 2020 |
| | | | | IN | 202047043221 | A | 23 October 2020 |
| | | | | VN | 75464 | A | 25 January 2021 |
| | | | | CN | 111345019 | B | 31 August 2021 |
| | | | | CN | 113923422 | A | 11 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022110474511